# FASCICULE DE BREVET EUROPEEN

(11) **EP 1 725 372 B1**
(45) Date de publication et mention de la délivrance du brevet: **05.12.2007**
(21) Numéro de dépôt: 05717559.8
(22) Date de dépôt: 04.02.2005
(51) Int. Cl.: B23Q 1/54, B23Q 1/66, B23Q 7/02

(54) **PRESENTOIR TOURNANT A PLATEAUX BASCULANTS**
DREHENDER RÜSTPLATZ MIT SCHWENKPLATTEN
REVOLVING WORKPIECE CARRIER UNIT WITH PIVOTING PLATES

(30) Priorité: 13.02.2004 FR 0401450
(43) Date de publication de la demande: 29.11.2006
(73) Titulaire: Coutier Industrie S.A.R.L., 57970 Basse Ham (FR)
(72) Inventeur: COUTIER, Charles, F-57570 Cattenom (FR)
(74) Mandataire: Lavialle, Bruno François Stéphane
(86) Numéro de dépôt international: PCT/FR2005/000256
(87) Numéro de publication internationale: WO 2005/082571

(56) Documents cités:
- EP-A- 1 312 440
- DE-A- 19 955 184
- US-A- 4 797 990

## Description

La présente invention concerne un présentoir tournant pour la mise à disposition de pièces pour des opérateurs agissant sur des lignes d'assemblage par exemple de véhicules automobiles (voir, par exemple, EP-1 312 440-A).

Le but de la présente invention est de faciliter au maximum la tâche des opérateurs sur les lignes d'assemblage et de montage au moyen d'un appareil de support des pièces qui est aisé à manoeuvrer notamment à la main et qui offre à l'opérateur un accès commode aux pièces qu'il supporte.

A cet effet l'invention a donc pour objet un présentoir tournant comportant un châssis horizontal tournant autour d'un axe vertical formant le support d'au moins un plateau dans lequel le plateau est articulé au châssis autour d'un axe horizontal, des moyens étant prévus pour engendrer une force permanente de basculement du plateau autour de son axe d'articulation, du côté opposé de l'axe vertical tandis que ce présentoir comporte au moins une piste d'appui pour l'extrémité d'une béquille de soutien du plateau.

Cette disposition permet, en jouant sur le profil de la piste, de fixer l'inclinaison du plateau autour de son axe d'articulation sur le châssis en fonction de la position angulaire du châssis autour de l'axe vertical. On comprend donc que si la piste comporte une dépression dans une position déterminée, la béquille suivra cette dépression et le plateau s'inclinera d'une valeur angulaire qui sera fonction de l'amplitude de cette dépression.

Dans un premier mode de réalisation de l'invention, la piste forme un chemin de roulement circulaire stationnaire pour un galet d'axe horizontal porté par la béquille et qui comporte une zone dénivelée (la dépression susdite) assurant le basculement contrôlé du plateau autour de son axe d'articulation et l'indexation angulaire du châssis autour de l'axe vertical. L'inclinaison du plateau dépendra bien entendu de l'amplitude de la profondeur du dénivelé ou de la dépression.

Dans un autre mode de réalisation de l'invention, la piste comporte une partie périphérique d'un disque horizontal stationnaire, sous laquelle un galet de la béquille est appliqué par le poids du plateau, cette partie périphérique étant pourvue d'une échancrure en regard de laquelle un support stationnaire est placé et dont la partie supérieure reprend le soutien du plateau lorsque le galet tombe dans l'échancrure, le plateau étant pourvu d'une piste secondaire d'appui de l'extrémité du support stationnaire présentant une zone dénivelée assurant le basculement contrôlé du plateau autour de son axe d'articulation et l'indexation angulaire du châssis autour de l'axe vertical de rotation du présentoir.

Les moyens de basculement du plateau comprennent dans un mode de réalisation la position de l'axe d'articulation du plateau sur le châssis qui est telle que la projection horizontale du centre de gravité du plateau au moins en charge, est située de l'autre côté de l'axe d'articulation par rapport à l'axe vertical de rotation du châssis.

Les moyens de basculement peuvent aussi comprendre, au lieu de cette position d'axe d'articulation ou en complément de celle-ci, un organe élastique de poussée du plateau, situé entre ce dernier et le châssis.

D'autres caractéristiques et avantages de l'invention ressortiront de la description donnée ci-après de manière schématique de deux exemples de réalisation du présentoir tournant.

Il sera fait référence aux dessins annexés parmi lesquels :
- la figure 1 illustre un premier mode de réalisation du présentoir selon l'invention ;
- la figure 2 est un schéma d'un second mode de réalisation de ce présentoir.

Le présentoir comporte un socle 1 posé ou fixé à la surface 2 d'un sol horizontal, ce socle 1 définissant un axe 3 vertical de rotation pour un châssis 4 qui comprend par exemple deux longerons parallèles de soutien de deux axes d'articulations 5a et 5b.

Un plateau 6 est monté sur le châssis 4 par l'axe d'articulation 5a et comporte une béquille 7 pourvue d'un ou de deux galets de roulement 8 sur le sol 2. De la même manière un plateau 9 est articulé au châssis 4 autour de l'axe horizontal 5b et possède une béquille 10 avec des organes de roulement d'extrémité 11.

Chacun des plateaux 6 et 9 peut être complété par des parois verticales de contention d'une charge qui est apportée du côté gauche de la figure selon la flèche A et qui est extraite du côté droit de cette figure selon la flèche B.

Le châssis 4 possède également en partie basse et entre les longerons de soutien des axes 5a et 5b deux platines 12,13 qui forment des surfaces d'appui pour des organes élastiques comme des ressorts 14 et 15, chacun tendant à faire tourner le plateau 6, 9 correspondant dans le sens d'un basculement vers l'extérieur du présentoir. Les béquilles 7 et 10 s'opposent à la réalisation de ce basculement.

Lorsque le présentoir tourne autour de l'axe 3, les galets ou organes de roulement 8 et 11 décrivent une piste 16 qui est pour une grande partie de celle-ci circulaire horizontale et formé par la surface 2 du sol lui-même ou une semelle revêtant ce sol sous la trajectoire des galets 8, 11. Pour une portion angulaire de cette piste limitée, celle-ci affecte une dépression 17 aménagée dans le sol lui-même et offrant une surface de roulement toujours sensiblement perpendiculaire à chacune des béquilles 7 et 10 lorsqu'elles passent à son niveau.

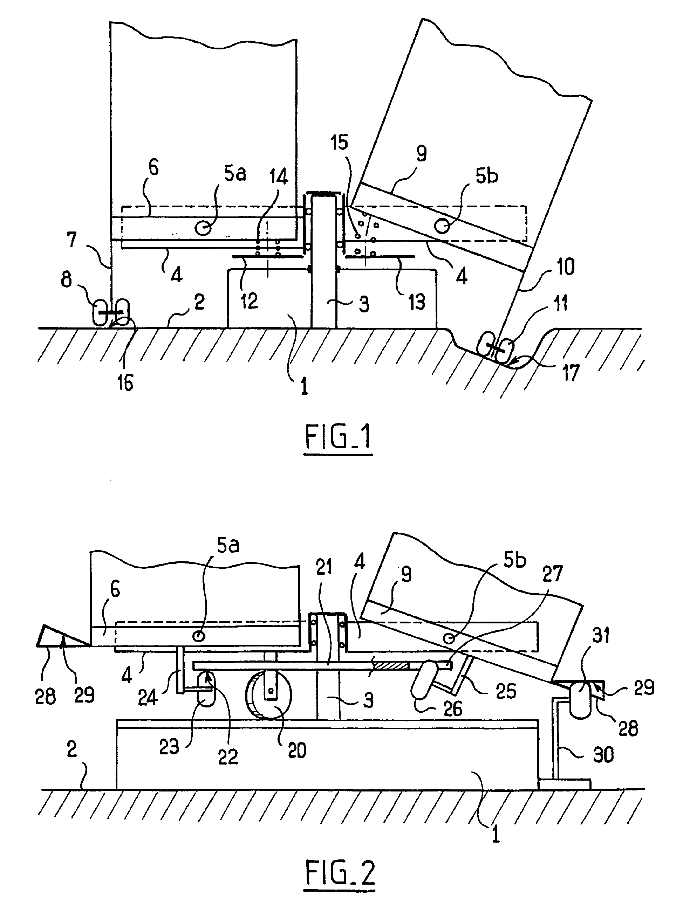

Lorsque le plateau 6 est dans sa position représenté à la figure 1, il y parvient vide. A ce moment il est chargé des pièces que l'appareil doit présenter à l'opérateur dans la direction de la flèche A. On aura déterminé expérimentalement la géométrie et la disposition notamment de l'axe 5a par rapport au châssis et à la béquille 7 pour que, dans le cas de la plupart des chargements du plateau 6, le centre de gravité de ce chargement G soit situé dans une position telle que sa projection horizontale passe de l'autre côté de l'axe 5a par rapport à l'axe vertical de rotation 3. Lorsque le chargement est accompli et surtout le déchargement du plateau 9 est réalisé, l'opérateur fait tourner le présentoir autour de l'axe 3. Les galets 11 remontent la pente de la dépression de la piste 17 sans beaucoup de difficulté puisque le plateau 9 est vide. L'action même de la main de l'opérateur peut produire un basculement dans le sens contraire d'une aiguille d'une montre du plateau 9 autour de l'axe 5b décollant ainsi les galets 11 de la piste 17, la pente alors n'offrant plus aucune résistance à la rotation du présentoir autour de l'axe 3. Dans le même temps le plateau 6 tourne pour venir se substituer au plateau 9 et les galets 8 abordent la pente descendante de la dépression 17 qu'ils suivent sans problème du fait du décalage du centre de gravité G et/ou de l'action du ressort 14 qui tend à plaquer les galets 7 sur la piste 16 et 17. Au point bas de la dépression 17, le présentoir s'arrête de tourner et est indexé angulairement. Dans le même temps le plateau 6 a basculé et prend une position inclinée identique à celle représentée à la figure pour le plateau 9 et l'opérateur peut se servir de pièces portées par le plateau 9 et dont l'accès est facilité du fait de l'inclinaison de ce plateau dans sa direction.

A la figure 2 on retrouve certains des éléments déjà décrits avec les mêmes références. Le socle 1 du présentoir possède une surface supérieure qui constitue une piste de roulement pour des galets 20 solidaires du châssis 4 et qui supporte le poids de ce châssis et du chargement des plateaux du présentoir. Ces galets peuvent être au nombre de 4 ou 6. A l'intérieur de la trajectoire de ces galets, le socle 1 comporte un disque 21 distant verticalement de la piste des galets 20, la partie périphérique de ce disque constituant par sa face inférieure 22 une piste de roulement pour un galet 23 prévu à l'extrémité de la béquille 24 solidaire du plateau 6. La béquille 24 est disposée par rapport à l'axe 5a d'articulation du plateau au châssis 4 de manière que toute tendance du plateau à basculer vers l'extérieur et contrée par l'appui du galet 23 sur la piste inférieure 22 du disque 21.

De la même manière le plateau 9 comporte une béquille 25 pour un galet 26 maintenu au contact de la piste 22.

Le disque 21 possède une échancrure 27 dans laquelle peut tomber chacun des galets 23 et 26. Ainsi lorsque le galet 23 ou, comme représenté le galet 26 parvient au niveau de cette échancrure, le plateau 9 n'est plus retenu contre la tendance à son basculement et bascule donc vers l'extérieur. Ce basculement est cependant contrôlé par un élément de piste 28 solidaire du plateau 9 qui possède une dépression 29 avec des pentes de chaque côté de celles-ci, piste qui coopère avec une béquille stationnaire 30 prévue en face de l'échancrure 27 et équipée d'un galet de roulement 31. Ainsi lorsque le galet 26 parvient dans l'échancrure 27, la piste 28 est au contact du galet 31 et la poursuite de la rotation du présentoir autour de l'axe 3 s'accompagne d'un basculement contrôlé progressif du plateau 9 par la coopération du galet 31 avec la piste 28, 29. Une fois le plateau 9 vidé des pièces qu'il supporte, ce dernier est remonté à la main par l'opérateur en même temps qu'il fait tourner le présentoir pour amener le plateau 6 et le galet 23 en regard d'échancrure 27.

La disposition de la figure 2 qui est une variante de réalisation de la figure 1, présente l'avantage par rapport à cette dernière d'être totalement amovible et de ne demander aucune préparation du sol de l'atelier auquel elle est destinée. En outre, le creux 29 de la piste 28 est tourné vers le bas et donc ne peut pas être le siège d'accumulation de déchets tendant à le combler comme l'est la dépression 17.

Les efforts développés par les opérateurs avec l'appareil selon l'invention sont considérablement réduits et en font un présentoir ergonomique.

## Revendications

1. Présentoir tournant comportant un châssis horizontal (4) tournant autour d'un axe vertical (3) formant le support d'au moins un plateau (6, 9) articulé au châssis (4) autour d'un axe horizontal (5a, 5b), **caractérisé en ce que** des moyens (14, 15) sont prévus pour engendrer une force permanente de basculement du plateau (6, 9) autour de son axe d'articulation (5a, 5b) du côté opposé à l'axe vertical (3), et **en ce qu'**il comporte au moins une piste d'appui (16, 17) pour l'extrémité d'une béquille (7, 10) de soutien du plateau (6, 9).

2. Présentoir selon la revendication 1, **caractérisé en ce que** la piste (16, 17) forme un chemin de roulement circulaire stationnaire pour un organe de roulement (8, 11) d'axe horizontal porté par la béquille (7, 10) et qui comporte une zone dénivelée (17) assurant le basculement contrôlé du plateau (6, 9) autour de son axe d'articulation (5a, 5b) et l'indexation angulaire du châssis (4) autour de l'axe vertical (3).

3. Présentoir selon la revendication 1, **caractérisé en ce que** la piste d'appui susdite comporte la partie périphérique (22) d'un disque horizontal (21) stationnaire sous laquelle un galet (23, 26) de la béquille (24, 25) est appliqué par les moyens de basculement susdits, cette partie périphérique étant pourvue d'une échancrure (27) en regard de laquelle un support stationnaire (30) est placé et dont la partie supérieure reprend le soutien du plateau (6, 9) lorsque le galet (23, 26) tombe dans l'échancrure (27), le plateau (6, 9) étant pourvu d'une piste secondaire (28, 29) d'appui de l'extrémité (31) du support stationnaire (30), présentant une zone dénivelée (29) assurant le basculement contrôlé du plateau (6, 9) autour de son axe d'articulation (5a, 5b) et l'indexation angulaire du châssis (4) autour de l'axe vertical (3).

4. Présentoir selon l'une des revendications précédentes, **caractérisé en ce que** les moyens de basculement du plateau comprennent la position de l'axe d'articulation (5a, 5b) du plateau sur le châssis (4) telle que la projection horizontale du centre de gravité du plateau, au moins en charge, est situé de l'autre côté de l'axe de l'articulation (5a, 5b) par rapport à l'axe vertical (3) de rotation du châssis.

5. Présentoir selon l'une des revendications précédentes, **caractérisé en ce que** les moyens de basculement du plateau comprennent un organe élastique (14, 15) de poussée du plateau, situé entre ce dernier et le châssis (12, 13).

## Claims

1. A revolving display unit comprising a horizontal frame (4) revolving about a vertical shaft (3) forming the support for at least one tray (6, 9) that is hinged to the frame (4) about a horizontal pin (5a, 5b), the display unit being **characterized in that** means (14, 15) are provided for generating a permanent force tending to tilt the tray (6, 9) about its hinge pin (5a, 5b) and away from the vertical shaft (3), and **in that** it includes at least one bearing track (16, 17) for bearing against the end of a prop (7, 10) supporting the tray (6, 9).

2. A display unit according to claim 1, **characterized in that** the track (16, 17) forms a stationary circular running path for a horizontal-axis rolling member (8, 11) carried by the prop (7, 10) and including a zone (17) with a change of level providing controlled tilting of the tray (6, 9) about its hinge pin (5a, 5b) and angular indexing of the frame (4) about the vertical shaft (3).

3. A display unit according to claim 1, **characterized in that** the above-mentioned bearing track comprises the peripheral portion (22) of a stationary horizontal disk (21) under which a wheel (23, 26) of the prop (24, 25) is pressed by the above-mentioned tilting means, said peripheral portion being provided with a notch (27) having a stationary support (30) placed in register therewith, the top portion of the support taking over supporting the tray (6, 9) when the wheel (23, 26) penetrates into the notch (27), the tray (6, 9) being provided with a secondary bearing track (28, 29) for the end (31) of the stationary support (30), presenting a zone (29) with a change of level providing controlled tilting of the tray (6, 9) about its hinge pin (5a, 5b) and angular indexing of the frame (4) about the vertical shaft (3).

4. A display unit according to any preceding claim, **characterized in that** the means for tilting the tray comprise positioning the hinge pin (5a, 5b) of the tray on the frame (4) in such a manner that the horizontal projection of the center of gravity of the tray, at least when loaded, lies on the side of the hinge pin (5a, 5b) that is remote from the vertical shaft (3) on which the frame revolves.

5. A display unit according to any preceding claim, **characterized in that** the means for tilting the tray comprise a resilient member (14, 15) applying thrust to the tray and situated between the tray and the frame (12, 13).

## Patentansprüche

1. Drehender Rüstplatz, umfassend ein horizontales Gestell (4), das sich um eine vertikale Achse (3) dreht und eine Stütze für mindestens eine Platte (6, 9) bildet, die mit dem Gestell (4) um eine horizontale Achse (5a, 5b) schwenkbar verbunden ist, **dadurch gekennzeichnet, dass** Mittel (14, 15) vorgesehen sind zum Erzeugen einer konstanten Kraft zum Schwenken der Platte (6, 9) um ihre Schwenkachse (5a, 5b) nach der der vertikalen Achse (3) abgewandten Seite, und dass er mindestens eine Laufbahn (16, 17) für das Ende einer Stützvorrichtung (7, 10) zum Stützen der Platte (6, 9) hat.

2. Rüstplatz nach Anspruch 1, **dadurch gekennzeichnet, dass** die Laufbahn (16, 17) eine kreisförmige stationäre Rollbahn für einen Rollkörper (8, 11) bildet mit einer horizontalen Achse, der von der Stützvorrichtung (7, 10) getragen ist, und einen Bereich mit Höhenunterschied (17) umfasst, der das kontrollierte Schwenken der Platte (6, 9) um ihre Schwenkachse (5a, 5b) und eine Winkel-Indexierung des Gestells (4) um die vertikale Achse (3) gewährleistet.

3. Rüstplatz nach Anspruch 1, **dadurch gekennzeichnet, dass** die oben genannte Laufbahn den Randbereich (22) einer stationären horizontalen Scheibe (21) umfasst, an der von unten eine Laufrolle (23, 26) der Stützvorrichtung (24, 25) unter der Wirkung der oben genannten Schwenkmittel anliegt, wobei dieser Randbereich mit einer Ausnehmung (27) ausgestattet ist, gegenüber der eine stationäre Stütze (30) angebracht ist, deren oberster Bereich die Stützung der Platte (6, 9) übernimmt, wenn die Laufrolle (23, 26) in die Ausnehmung (27) fällt, und wobei die Platte (6, 9) zur Auflage auf das Ende (31) der stationären Stütze (30) mit einer zweiten Laufbahn (28, 29) ausgestattet ist, die einen Bereich mit Höhenunterschied (29) hat, der das kontrollierte Schwenken der Platte (6, 9) um ihre Schwenkachse (5a, 5b) und eine Winkel-Indexierung des Gestells (4) um die vertikale Achse (3) gewährleistet.

4. Rüstplatz nach einem der vorhergehenden Ansprüche, **dadurch gekennzeichnet, dass** die Schwenkmittel der Platte die Position der Schwenkachse (5a, 5b) der Platte auf dem Gestell (4) umfassen, dahingehend dass die horizontale Projektion des Schwerpunktes der Platte, zumindest im beladenen Zustand, auf der der vertikalen Drehachse (3) des Gestells gegenüberliegenden Seite der Schwenkachse (5a, 5b) liegt.

5. Rüstplatz nach einem der vorhergehenden Ansprüche, **dadurch gekennzeichnet, dass** die Schwenkmittel der Platte ein elastisches Element (14, 15) zum Ausüben eines Drucks auf die Platte umfassen, das sich zwischen letzterer und dem Rahmen (12, 13) befindet.
